# EUROPEAN PATENT APPLICATION

(11) **EP 1 061 042 A1**
(43) Date of publication of application: **20.12.2000**
(21) Application number: 00304964.0
(22) Date of filing: 13.06.2000
(51) Int. Cl.: C01B 31/02

(54) **Method for gas phase purification of carbon nanotubes by thermal treatment in diffusion furnace**

(30) Priority: 15.06.1999 KR 9922416; 27.04.2000 KR 0022526
(71) Applicant: Iljin Nanotech Co., Ltd., Seoul (KR); Cheol-Jin, Lee, Gunsan-City, Jeonlabuk-Do (KR)
(72) Inventor: Lee, Cheol-Jin, Gunsan-City, Jeonlabuk-Do (KR); Yoo, Jae-Eun, Seongbuk-Gu, Seoul (KR)
(74) Representative: Browne, Robin Forsythe, Dr.

(57) **Abstract**

A method of purifying carbon nanotubes in a gas phase by pyrolysis of acid gas. The carbon nanotube purification method includes purifying carbon nanotubes using an acid gas thermally decomposed in a diffusion furnace having a tube suitable for thermal treatment. The acid gas includes hydrochloric acid gas or nitric acid gas, and can be supplied along with a diluent gas, such as hydrogen gas, into the tube.

## Description

### BACKGROUND OF THE INVENTION

### 1. Field of the Invention

The present invention relates to the purification of carbon nanotubes, and more particularly, to a method of purifying carbon nanotubes in a gas phase by thermal treatment.

### 2. Description of the Related Art

Carbon nanotubes have miniature cylindrical structures with a diameter on the order of a few nanometers and an aspect ratio of 10 to 1000. Carbon nanotubes have a honeycomb-like hexagon pattern in which each carbon atom is combined with three neighboring carbon atoms. Also, carbon nanotubes can function as either a conductor, like metals, or a semiconductor, according to their structures, and thus application fields of these carbon nanotubes are expected to be extensive.

Recently, a variety of approaches which enable the synthesis of carbon nanotubes on a mass production scale have been suggested. However, almost all existing techniques produce other carbonaceous byproducts as desired carbon nanotubes are grown. Also, according to a variety of processing conditions, for example, which catalyst or film material is used for the synthesis of carbon nanotubes, crude carbon nanotubes may include excess impurities including transition metal particles, transition metal derivatives, amorphous carbon, fullerenses, carbon nanoparticles or graphite.

In particular, an electrical discharging technique used to form multi-shelled carbon nanotubes can cause a large amount of carbon nanoparticles as byproducts. In addition, plasma or thermal chemical vapor deposition (CVD), although the amount of carbon nanoparticles is less compared to the electrical discharging technique, still produces byproducts, such as carbon nanoparticles or amorphous carbon on the surface or sides of carbon nanotubes, and transition metal particles at the tips of carbon nanotubes.

To apply carbon nanotubes to field emission displays (FEDs), vacuum fluorescent displays (VFDs) or white light sources, such unnecessary byproducts must be removed through purification.

A number of purification techniques, such as filtering, chromatography, ultrasonic cleaning, centrifugal separation and the like, were utilized to remove the above-listed impurities from crude carbon nanotubes. However, these conventional techniques are complicated and consume much time. Moreover, a relatively large lump of byproducts can be eliminated from the crude carbon nanotubes, while leaving miniature carbon nanoparticles and transition metals at the surface or sides of carbon nanotubes, and thus a purification yield is very low.

In another conventional technique, which was described in Japanese Patent Application No. hei 5-133048, carbon nanotubes were purified by oxidation in an oxidative gas atmosphere, i.e., in oxygen or water vapor. This method is based on a difference in chemical reactivity at a molecular level between pentagons and hexagons in graphite which constitutes the outer walls of carbon nanotubes. However, it is very difficult to control the optimum reaction temperature and time for the purification, and carbon nanotubes are also oxidized with time, thereby lowering yield.

Japanese Patent Laid-open Publication No. Hei 8-12310 described a process for purifying carbon nanotubes comprising combining a mixture of carbon nanotubes and accompanying carbon impurities with a reagent selected from the group consisting of oxidation agents, nitration agents and sulfonation agents in the liquid phase, and chemically reacting the mixture with the reagent in the liquid phase. This purification can be performed at low temperatures, but the chemical reaction in the liquid phase takes much time - 2 to 6 hours, and subsequent filtering, cleaning and drying processes are needed. In a certain case, further neutralization in a basic solution and a subsequent cleaning process must be performed. As a result, the purification process becomes complicated with increased processing time.

### SUMMARY OF THE INVENTION

It is an objective of the present invention to provide a method of purifying carbon nanotubes, in which a variety of impurities can be removed from crude carbon nanotubes in a simple and rapid way.

The object of the present invention is achieved by a method of purifying carbon nanotubes, comprising purifying carbon nanotubes using an acid gas thermally decomposed in a diffusion furnace having a tube for thermal treatment.

Preferably, hydrochloric acid gas or nitric acid gas is used as the acid gas.

Preferably, purifying carbon nanotubes is carried out for 10 to 30 minutes.

Preferably, purifying carbon nanotubes comprises supplying the acid gas along with a diluent gas into the tube. The diluent gas may be hydrogen gas.

Preferably, the carbon nanotube purification method further comprises, before purifying carbon nanotubes, a ramp-up step of raising the temperature of the tube, while supplying an inert gas into the tube. The carbon nanotube purification method may further comprise, after purifying carbon nanotubes, a ramp-down step of reducing the temperature of the tube, while supplying an inert gas into the tube. Preferably, argon gas is used as the inert gas.

The simple purification method according to the present invention is able to effectively remove various types of impurities within a short period of time, with an excellent degree of purification and high yield.

### BRIEF DESCRIPTION OF THE DRAWINGS

The above objective and advantages of the present invention will become more apparent by describing in detail preferred embodiments thereof with reference to the attached drawings in which:
FIG. 1 is a vertical sectional view showing the configuration of a diffusion furnace applicable in purifying carbon nanotubes according to the present invention;
FIG. 2 is a timing chart for illustrating the control of temperature in a preferred embodiment of a method of purifying carbon nanotubes according to the present invention; and
FIG. 3 is a timing chart for illustrating the pulsing of gas in the preferred embodiment of the method of purifying carbon nanotubes according to the present invention.

### DETAILED DESCRIPTION OF THE INVENTION

The present invention will now be described more fully with reference to the accompanying drawings, in which preferred embodiments of the invention are shown. This invention may, however, be embodied in many different forms and should not be construed as being limited to the embodiments set forth herein. Rather, these embodiments are provided so that this disclosure will be thorough and complete, and will fully convey the concept of the invention to those skilled in the art.

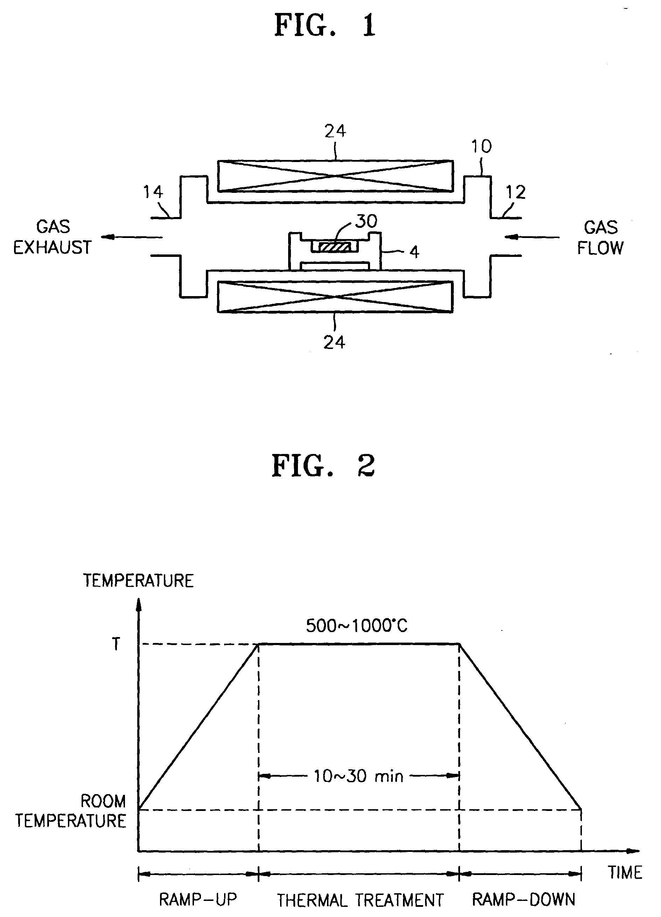

The configuration of a diffusion furnace, which can be employed in a method of purifying carbon nanotubes according to the present invention, is illustrated in FIG. 1. In the diffusion furnace shown in FIG. 1, thermal treatment of carbon nanotubes is carried out in a quartz tube 10. The quartz tube 10 has a gas inlet portion 12 for allowing gases for purification of carbon nanotubes to flow into the quartz tube 10, and an exhaust portion 14 for exhausting the gases used in a purification process. Also, a resistance heater 24 for controlling the temperature of thermal treatment in the quartz tube 10 and maintaining desired temperatures is installed around the quartz tube 10. Here, the resistance heater 24 may be constructed of a resistance coil. Crude carbon nanotubes 30, which need to be purified, are loaded onto a quartz boat 4 and positioned into the quartz tube 10 as shown in FIG. 1.

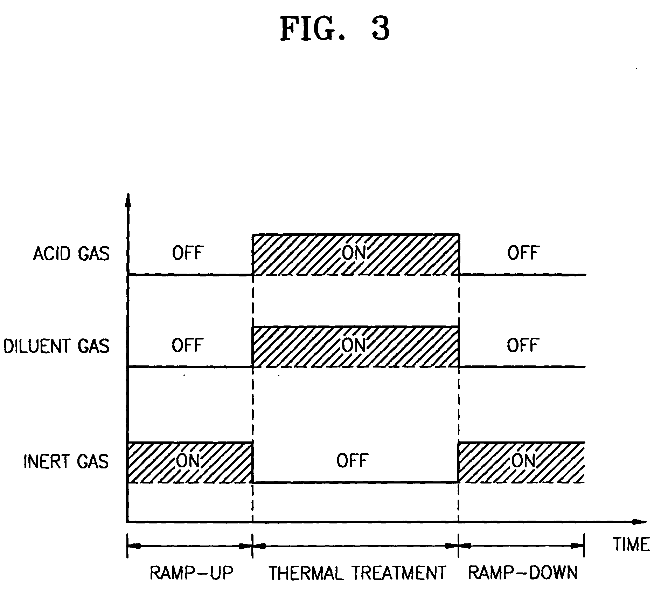

FIGS. 2 and 3 are timing charts illustrating the control of temperature and the pulsing of gas, respectively, in a preferred embodiment of the carbon nanotube purification method according to the present invention. Referring to FIGS. 2 and 3, first the diffusion furnace of FIG. 1 is exposed to a ramp-up step of raising the temperature of the quartz tube 10 to a target thermal treatment temperature T. Before the temperature of the quartz tube 10 exceeds 400°C, the quartz tube 10 holding the crude carbon nanotubes 30 is moved into the diffusion furnace. After loading the quartz tube 10 with the crude carbon nanotube 30 into the diffusion furnace, an inert gas is supplied into the quartz tube 10 for the ramp-up step at a flow rate of, for example, about 200 to 500 sccm.

When the temperature of the quartz tube 10 reaches the target temperature T, the supply of the inert gas is cut off. Then, the thermal treatment process is continued for about 10 to 30 minutes at the same temperature, while supplying an acid gas and a diluent gas into the quartz tube 10, to the crude carbon nanotubes.

Preferably, the acid gas is hydrochloric acid (HCl) gas or nitric acid (HNO₃) gas. In the case where HCl gas is used as the acid gas, hydrogen ions (H⁺) generated by thermal decomposition of HCl remove carbon nanoparticles and carbon particles, and chloride ions (Cl⁻) etch transition metals. In the case where HNO₃ gas is used as the acid gas, hydrogen ions generated by thermal decomposition of HNO₃ remove carbon nanoparticles and carbon particles, and NO₃⁻ ions etch transition metals. The acid gas is supplied at a flow rate of about 30 to 200 sccm.

Preferably, hydrogen gas is used as the diluent gas, for example, at a flow rate of about 60 to 400 sccm.

During the thermal treatment, the temperature of the quartz tube 10 is kept to be between about 500 and 1000°C. For the thermal treatment of crude carbon nanotubes, the acid gas is thermally decomposed, and various types of particles, such as carbon lumps, carbon nanoparticles and transition metal particles, which were adhered to the surface, tip portion or side of the cylindrical graphite portion of the crude carbon nanotubes, are simultaneously removed by the decomposed acid gas.

After the thermal treatment is completed, the supply of the acid gas and diluent gas is cut off. Thus, a ramp-down step for lowering the temperature of the quartz tube 10 is performed, while supplying an inert gas, such as argon gas, into the quartz tube 10 at a flow rate of about 200 to 500 sccm. When the temperature of the quartz tube 10 is down to 400°C or less, the purified carbon nanotubes are drawn out of the diffusion furnace.

In the drawings and specification, typical preferred embodiments of the invention are disclosed and, although specific terms are employed, they are used in a generic and descriptive sense only and not for purposes of limitation.

In the gas phase purification of carbon nanotubes according to the present invention, crude carbon nanotubes are purified by an acid gas thermally decomposed in a diffusion furnace. The inventive purification method is simple compared to conventional techniques, and can effectively remove a variety of impurities within a short period of time, with an excellent degree of purification and high yield. Thus, the inventive carbon nanotube purification method is suitable for a larger scale purification.

While this invention has been particularly shown and described with reference to preferred embodiments thereof, it wilt be understood by those skilled in the art that various changes in form and details may be made thereto without departing from the spirit and scope of the invention as defined by the appended claims.

## Claims

1. A method of purifying carbon nanotubes, comprising purifying carbon nanotubes using an acid gas thermally decomposed in a diffusion furnace having a tube for thermal treatment.

2. The method of claim 1, wherein hydrochloric acid gas or nitric acid gas is used as the acid gas.

3. The method of claim 1, wherein purifying carbon nanotubes is carried out at a temperature of 500 to 1000°C.

4. The method of claim 1 wherein purifying carbon nanotubes is carried out for 10 to 30 minutes.

5. The method of claim 2, wherein purifying carbon nanotubes comprises supplying the acid gas along with a diluent gas into the tube.

6. The method of claim 5, wherein the diluent gas is hydrogen gas.

7. The method of claim 5, wherein the acid gas is supplied at a flow rate of 30 to 200 sccm.

8. The method of claim 5, wherein the diluent gas is supplied at a flow rate of 60 to 400 sccm.

9. The method of any of claims 1 through 8, before purifying carbon nanotubes, further comprising a ramp-up step of raising the temperature of the tube, while supplying an inert gas into the tube.

10. The method of claim 9, wherein the inert gas is argon gas.

11. The method of claim 9, wherein the inert gas is supplied at a flow rate of 200 to 500 sccm.

12. The method of claim 9, wherein, in the ramp-up step, the carbon nanotubes are put into the tube when the temperature of the tube is 400°C or less.

13. The method of any of claims 1 through 8, after purifying carbon nanotubes, further comprising a ramp-down step of reducing the temperature of the tube, while supplying an inert gas into the tube.

14. The method of claim 13, wherein the inert gas is argon gas.

15. The method of claim 13, wherein the inert gas is supplied at a flow rate of 200 to 500 sccm.

16. The method of claim 13, wherein, in the ramp-down step, the purified carbon nanotubes are drawn out of the tube when the temperature of the tube is 400°C or less.
